# EUROPÄISCHE PATENTSCHRIFT

(11) **EP 1 477 712 B1**
(45) Veröffentlichungstag und Bekanntmachung des Hinweises auf die Patenterteilung: **14.06.2006**
(21) Anmeldenummer: 04010871.4
(22) Anmeldetag: 07.05.2004
(51) Int. Cl.: F16J 15/10

(54) **Verfahren zur Erzeugung einer Dichtung an einem Bauteil**
Method for providing a seal on a mechanical part
Méthode visant à pourvoir une pièce mécanique d'un joint d'étanchéité

(30) Priorität: 14.05.2003 DE 10321584
(43) Veröffentlichungstag der Anmeldung: 17.11.2004
(73) Patentinhaber: Federal-Mogul Sealing Systems Bretten GmbH, 75015 Bretten (DE)
(72) Erfinder: Salameh, Ralf, 75053 Gondelsheim (DE); Hemmrich, Thomas, Bloomfield Hills 48304 Michigan (US)

(56) Entgegenhaltungen:
- DE-A- 3 639 218
- US-A- 3 653 673

## Beschreibung

Die Erfindung betrifft ein Verfahren zur Erzeugung einer Dichtung an einem Bauteil.

Aufgrund hohen Kostendruckes, insbesondere in der Automobilindustrie, werden in vielen Dichtungsbereichen kostengünstige Lösungen gesucht. Hierbei wird zunehmend eine Verklebung von Bauteilen vorgenommen, was jedoch Nachteile mit sich bringt, speziell, wenn Bauteile im Reparaturfall demontiert und neu abgedichtet werden müssen.

Allgemein bekannt ist, Dichtungen direkt auf Deckel aufzuspritzen, wobei das Bauteil zusammen mit einer Werkzeughälfte eine Kavität bildet, in die Material eingespritzt werden kann. Das Werkzeug hat hierbei die Form der Dichtung. Ein derartiges Verfahren wird beispielsweise in der DE-A 3 639 218 beschrieben.

Ferner allgemein bekannt sind Dichtungen, die als separate Elemente mit Bauteilen in Wirkverbindung gebracht werden.

Durch die US-A 4,273,607 ist eine Einrichtung bekannt geworden, mit welcher ein eine Flachdichtung bildendes Material auf einem Bauteil aufgebracht werden kann. Mittels eines um 180° drehbaren Werkzeuges wird das vorher auf dem Werkzeug abgelegte Dichtungsmaterial auf das Bauteil aufgebracht. Das Material trocknet an Luft und wird nicht weiter bearbeitet, insbesondere formtechnisch nicht verändert. (siehe auch US.A.3 653 673)

Der Erfindung liegt die Aufgabe zugrunde, ein Verfahren zur Erzeugung einer Dichtung an einem Bauteil bereit zu stellen, das zumindest genauso kostengünstig wie die Verklebung der Bauteile ist, jedoch nicht deren Nachteil beinhaltet.

Diese Aufgabe wird gelöst durch ein Verfahren zur Erzeugung einer Dichtung an einem Bauteil, indem auf eine Fläche des bedarfsweise vorbehandelten Bauteiles durch Siebdruck ein Dichtungsmaterial aufgebracht und mittels eines unter vorgebbarer Temperatur stehenden Werkzeuges die Geometrie der fertigen Dichtung in das Dichtungsmaterial eingeprägt wird.

Vorteilhafte Weiterbildungen des erfindungsgemäßen Verfahrens sind den zugehörigen Unteransprüchen zu entnehmen.

Nach dem erfindungsgemäßen Verfahren hergestellte Bauteile sind somit mit einer integrierten Dichtung versehen, wobei die Bauteile aus Metall oder Kunststoff bestehen und insbesondere durch Ölwannen oder Deckel, d. h. Bauteile der Automobilindustrie, gebildet sind.

Mit dem Erfindungsgegenstand werden folgende Vorteile erreicht:
- kostengünstige Lösung zum Aufbringen der Dichtung direkt auf die Bauteile
- durch das Prägen der Dichtung ist die Möglichkeit zur Anpassung der Dichtlippenform und -höhe gegeben
- im Vergleich zum Verkleben ist eine definierte Formgebung möglich
- im Vergleich zum Verkleben ist die Verbindung wieder leicht lösbar
- im Vergleich zum Verkleben können durch die definierte Dichtlippenhöhe größere Bauteiltoleranzen kompensiert werden.

Im Siebdruckverfahren wird somit ein Dichtungsmaterial, wie beispielsweise Silikon oder ein Elastomermaterial, aufgebracht. Bedarfsweise kann es notwendig sein, dass das Bauteil an der Flanschfläche, je nach Material des Bauteiles oder Dichtungsmateriales, einer Vorbehandlung unterzogen werden muss. Nach dem Aufbringen des Dichtungsmateriales im Siebdruck wird mit einem geeigneten Werkzeug die Geometrie der Dichtlippen geprägt. Durch den Einsatz eines heißen Werkzeuges vernetzt der Dichtungswerkstoff zu einer formstabilen Dichtung.

Der Erfindungsgegenstand ist anhand einer Zeichnung dargestellt und wird wie folgt beschrieben. Es zeigen
- Figur 1: Verfahrensablauf zur Erzeugung einer Dichtung an einem Bauteil
- Figur 2: Schnitt durch den Dichtungsbereich

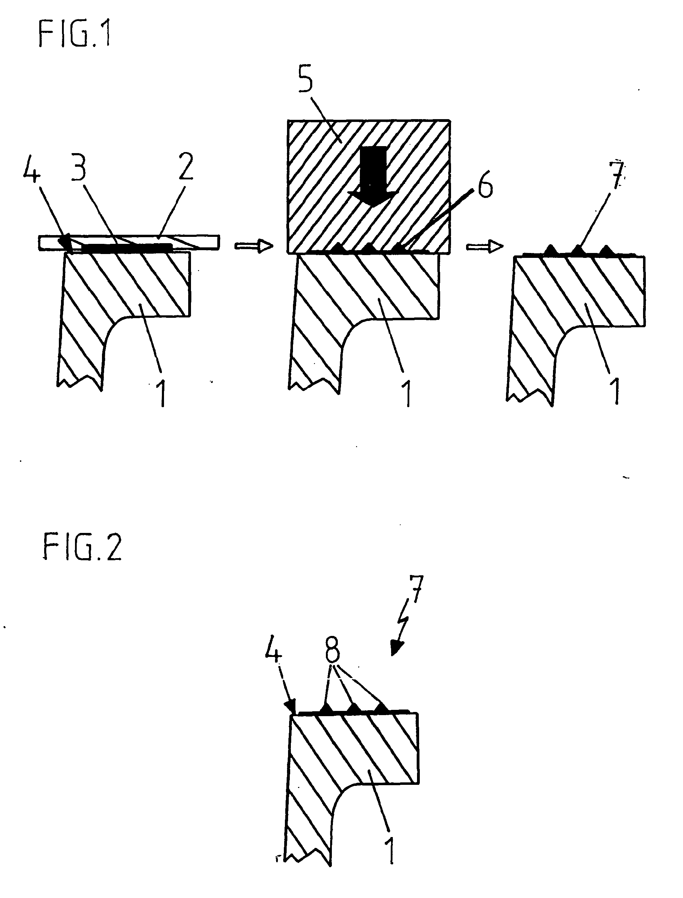

Figur 1 zeigt als Prinzipskizze das in Anspruch 1 angegebene Verfahren zur Erzeugung einer Dichtung an einem Bauteil. Das Bauteil soll in diesem Beispiel durch eine Ölwanne 1 gebildet sein. Im Siebdruckverfahren wird mittels eines geeigneten Werkzeuges 2 ein in diesem Beispiel aus Silikon bestehendes Dichtungsmaterial 3 auf die Fläche 4 (Flanschfläche) der Ölwanne 1 aufgebracht. In einem Folgeschritt wird das Dichtungsmaterial 3 mit einem eine entsprechende Kontur aufweisenden vorgeheizten Werkzeug 5 in Wirkverbindung gebracht, wobei der dem Dichtungsmaterial 3 zugewandte Bereich 6 des Werkzeuges 5 eine vorgebbare Geometrie, beispielsweise Dichtlippen, in das Dichtungsmaterial 3 einprägt. Durch den Einsatz des heißen Werkzeuges 5 vernetzt das Dichtungsmaterial 3.

Im Anschluß an den Prägevorgang ist die Ölwanne 1 mit der fertigen profilierten Dichtung 7 versehen.

Figur 2 zeigt einen Teilschnitt durch die gem. Figur 1 erzeugte Dichtung 7. Erkennbar ist die Fläche 4 der Ölwanne 1. Mittels des hier nicht weiter dargestellten Werkzeuges wurden Dichtlippen 8 in das Dichtungsmaterial 3 (Figur 1) eingeprägt, so dass die dargestellte Kontur der Dichtung 7 entstand.

Die Temperatur des Werkzeuges liegt dabei im Bereich von 150° C bis 170° C.

## Patentansprüche

1. Verfahren zur Erzeugung einer Dichtung (7) an einem Bauteil (1), indem auf eine Fläche (4) des bedarfsweise vorbehandelten Bauteils (1) durch Siebdruck (2) ein Dichtungsmaterial (3) aufgebracht und mittels eines, unter vorgebbarer Temperatur stehenden, Werkzeuges (5) die Geometrie (8) der fertigen Dichtung (7) in das Dichtungsmaterial (3) eingeprägt wird.

2. Verfahren nach Anspruch 1, **dadurch gekennzeichnet, dass** das Bauteil (1) durch eine Ölwanne oder einen Deckel gebildet wird, und dass die das Dichtungsmaterial (3) aufnehmende Fläche (4) einer Vorbehandlung unterzogen wird ehe das Dichtungsmaterial (3) durch Siebdruck (2) auf die als Flanschfläche ausgebildete Fläche (4) aufgebracht wird.

3. Verfahren nach Anspruch 1 oder 2, **dadurch gekennzeichnet, dass** Silikon oder Elastomermaterial durch Siebdruck (2) auf die Fläche (4) des Bauteiles (1) aufgebracht wird.

4. Verfahren nach einem der Ansprüche 1 bis 3, **dadurch gekennzeichnet, dass** die Temperatur des Werkzeuges (5) im Bereich von 150° C bis 170° C liegt.

## Claims

1. Method for producing a seal (7) on a mechanical part (1) in that a seal material (3) is applied by screen printing (2) on a face (4) of the mechanical part which has been pre-treated if necessary and the geometry (8) of the finished seal (7) is imprinted in the seal material by means of a tool (5) which is at a prescribable temperature.

2. Method according to claim 1, **characterised in that** the mechanical part (1) is formed by an oil sump or a cover, and **in that** the face (4) which receives the seal material (3) is subjected to a pre-treatment before the seal material (3) is applied onto the face (4) configured as flange face by screen printing (2).

3. Method according to claim 1 or 2, **characterised in that** silicone or elastomer material is applied onto the face (4) of the mechanical part (1) by screen printing (2).

4. Method according to one of the claims 1 to 3, **characterised in that** the temperature of the tool (5) is in the range of 150°C to 170°C.

## Revendications

1. Procédé de réalisation d'un joint d'étanchéité (7) sur une pièce (1), dans lequel un matériau d'étanchéité (3) est déposé par sérigraphie (2) sur une surface (4) de la pièce (1) prétraitée en fonction des besoins et la géométrie (8) du joint d'étanchéité (7) fini est obtenue par pressage dans le matériau d'étanchéité (3) au moyen d'un outil (5) chauffé à une température prédéfinissable.

2. Procédé selon la revendication 1, **caractérisé en ce que** la pièce (1) est en forme de carter d'huile ou de couvercle, et **en ce que** la surface (4) recevant le matériau d'étanchéité (3) est soumise à un prétraitement avant que le matériau d'étanchéité (3) soit déposé par sérigraphie (2) sur la surface (4) conçue sous forme de surface de bride.

3. Procédé selon la revendication 1 ou 2, **caractérisé en ce que** du silicone ou un matériau élastomère est déposé par sérigraphie (2) sur la surface (4) de la pièce (1).

4. Procédé selon l'une quelconque des revendications 1 à 3, **caractérisé en ce que** la température de l'outil (5) se situe dans le domaine de 150°C à 170°C.
